# EUROPEAN PATENT APPLICATION

(11) **EP 2 351 934 A1**
(43) Date of publication of application: **03.08.2011**
(21) Application number: 10150398.5
(22) Date of filing: 11.01.2010
(51) Int. Cl.: F04C 14/22, F04C 2/344, F16N 13/20

(54) **Variable-displacement lubricant pump**

(71) Applicant: Pierburg Pump Technology GmbH, 41460 Neuss (DE)
(72) Inventor: Cuneo, Carmine, 56100 Pisa (IT); Celata, Bernardo, 57126 Livorno (IT); Lazzerini, Massimiliano, 57023 San Pietro in Palazzi (IT); Squarcini, Raffaele, 57125 Livorno (IT); Righetti, Daniele, 57128 Livorno (IT)
(74) Representative: Ter Smitten, Hans

(57) **Abstract**

The present invention refers to a variable-displacement lubricant pump 10 for an internal combustion engine. The variable-displacement lubricant pump 10 for providing pressurized lubricant for an internal combustion engine comprises a rotor ring 14 with radially slidable vanes 16, wherein the slidable vanes 16 rotate in a shiftable stator ring 12 and are arranged between two side walls 24. The stator ring 12 envelopes a pump chamber 18. Further, the pump 10 comprises an inlet prechamber 20 which is separated by the stator ring 12 from the pump chamber 18 inside the stator ring 12. The variable-displacement lubricant pump 10 comprises an axial inlet opening 22 in a side wall 24, whereby the axial inlet opening 22 connects the inlet prechamber 20 with the pump chamber 18. In addition to the axial inlet opening 22 a radial inlet opening 26 is provided in the stator ring 12, the radial inlet opening 26 is positioned at the initial circumferential end of the axial inlet opening 22. The radial inlet opening 26 increases the inlet port area significantly so that the constructive limitation of the inlet port area is overcome.

## Description

The present invention refers to a variable-displacement lubricant pump for an internal combustion engine, the pump comprising a rotor with radially slideable vanes rotating in a shiftable stator ring, wherein the stator ring envelopes a pump chamber.

Variable lubricant pumps of the state of the art are known from US 7 344 361 B2. Such pumps comprise a housing with a shiftable stator ring in which a rotor with radially slideable vanes rotates and the stator ring envelopes a pump chamber, The pump further comprises a prechamber which is separated by the stator ring from the pump chamber. The prechamber is connected to the pump chamber by an inlet port for the lubricant. The suction performance of such vane pumps is usually a function of the geometry of the inlet port and the volume change of the vane chambers. The inlet port area of each pump chamber is limited in geometry by the inner side of the stator ring, the outside of the rotor ring and the slideable vanes.

The rotation of the rotor causes an increasing of the volume of the vane chambers at the suction side. This volume growth of the vane chambers causes a pressure drop across the inlet port, which forces the lubricant to fill the vane chambers. The pressure drop causes also a cavitation and makes an ideal filling at high rotation speeds of the pump impossible. A permanent cavitation causes a significant abrasion of the stator ring and the rotor during the life time of the pump. A non-ideal filling which is caused by the reduced volume flow rate at high rotation speeds decreases the performance of the pump.

It is an object of the present invention to provide a variable-displacement lubricant pump with an improved performance and improved long life properties.

This object is solved with a variable-displacement lubricant pump with the features of claim 1.

The variable-displacement lubricant pump for providing pressurized lubricant for an internal combustion engine according to claim 1 comprises a rotor ring with radially slidable vanes, wherein the slidable vanes rotate in a shiftable stator ring and are arranged between two side walls. The stator ring envelopes a pump chamber. Further, the pump comprises an inlet prechamber which is separated by the stator ring from the pump chamber inside the stator ring. The variable-displacement lubricant pump comprises an axial inlet opening in a side wall, whereby the axial inlet opening connects the inlet prechamber with the pump chamber. In addition to the axial inlet opening a radial inlet opening is provided in the stator ring, the radial inlet opening is positioned at the initial circumferential end of the axial inlet openings. The radial inlet opening increases the inlet port area significantly so that the constructive limitation of the inlet port area is overcome.

The radial inlet opening in the stator ring improves the ratio between the volume change of the vane chamber and the inlet port area which communicates with the vane chamber during rotation of the rotor, and in particular during the suction period.

According to a preferred embodiment of the invention, the variable-displacement lubricant pump has a radial inlet opening in the stator ring, the radial inlet opening is constructed as a recess-like opening at one axial end of the stator ring, whereby the recess-like opening is adjacent to the axial inlet opening.

Preferably, the radial inlet opening has an axial recess depth of at least 1/8 of the axial height of the stator ring. This construction increases the inlet port area, whereby the change in mechanical stability is negligible.

Preferably, the radial inlet opening has a circumferential extent of at least 1/6 of the total circumference of the stator ring so that a major part of the axial inlet opening is supplemented with the radial inlet opening.

The radial inlet opening is preferably positioned at the initial circumferential end of the axial inlet opening. At this position the initial relative volume change is extremely high so that cavitation occur. A simple and effective method to avoid cavitation in this initial phase is an increasement of the cross-section inlet port area.

According to a preferred embodiment of the invention, the stator ring has two recess-like openings which are provided parallel at both axial sides of the stator ring. A balanced filling of both sides avoids the cavitation.

The following is a description of an embodiment of the invention with reference to the drawings, in which:
Figure 1 shows a plan view of the variable-displacement lubricant pump for an internal combustion engine,
Figure 2 shows a plan view of the stator ring, and
Figure 3 shows cross-section of the stator ring of fig. 2 along line III - III with a height profile of the stator ring.

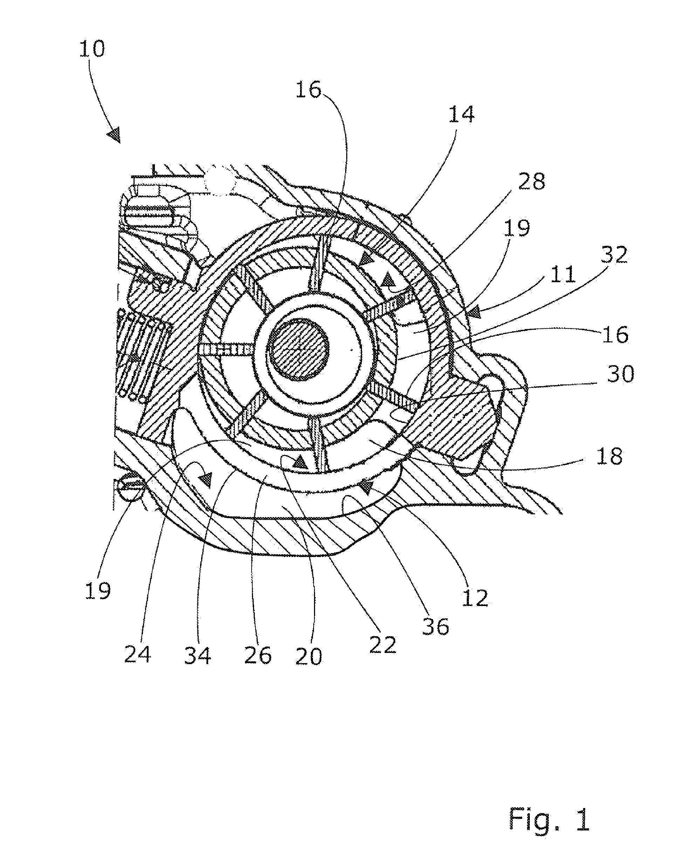

In figure 1, a variable-displacement lubricant pump 10 is shown in a plan view. The variable-displacement lubricant pump 10 comprises a metal housing 11 with two side walls 24, an axial inlet opening 22 and an axial outlet opening 28 in one side wall 24. The shiftable stator ring 12 is arranged axially between the two side walls 24 of which one side wall is not shown.

The metal housing 11 contains a rotor ring 14 with numerous radially slidable vanes 16, whereby the slidable vanes 16 are rotating inside a shiftable stator ring 12.

The rotor ring 14 is with its outside 32 arranged adjacent to the inner side 30 of the stator ring 12, whereby a protrusion (not shown) of the rotor ring 14 protrudes axially to the outside of the side wall 24. The protrusion of the rotor ring 14 can be rotated by a pump actuator which is not shown.

The stator ring 12 surrounds a few pump chamber sections 19 whereby the pump chamber sections 19 are formed by the inner side 30 of the stator ring 12, the outside 32 of the rotor ring 14, the vanes 16 and the two side walls 24.

An inlet prechamber 20 which is separated by the stator ring 12 from the pump chamber 18 is connected with the pump chamber 18 by the axial inlet opening 22. The inlet prechamber 20 is formed by the stator ring outside 34 of the stator ring 12, the inside 36 of the housing 11 and the two side walls 24.

The stator ring 12 comprises two radial inlet openings 26, wherein the radial inlet openings 26 are realized by two parallel recess-like openings at both axial sides of the stator ring 12.

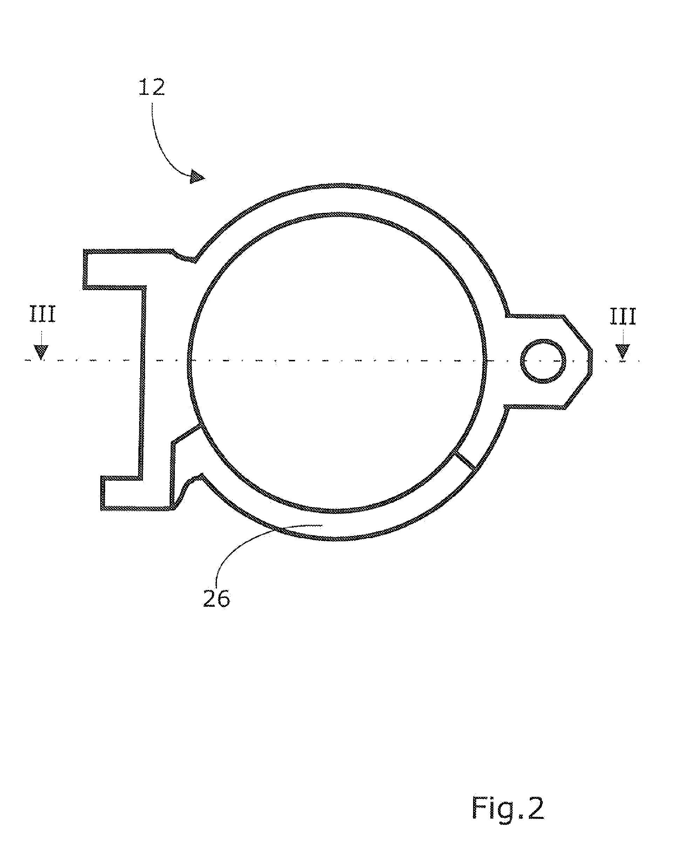

In figure 2, the stator ring 12 is shown in a plan view, so that one of the two radial inlet openings 26 formed as a recess can be seen.

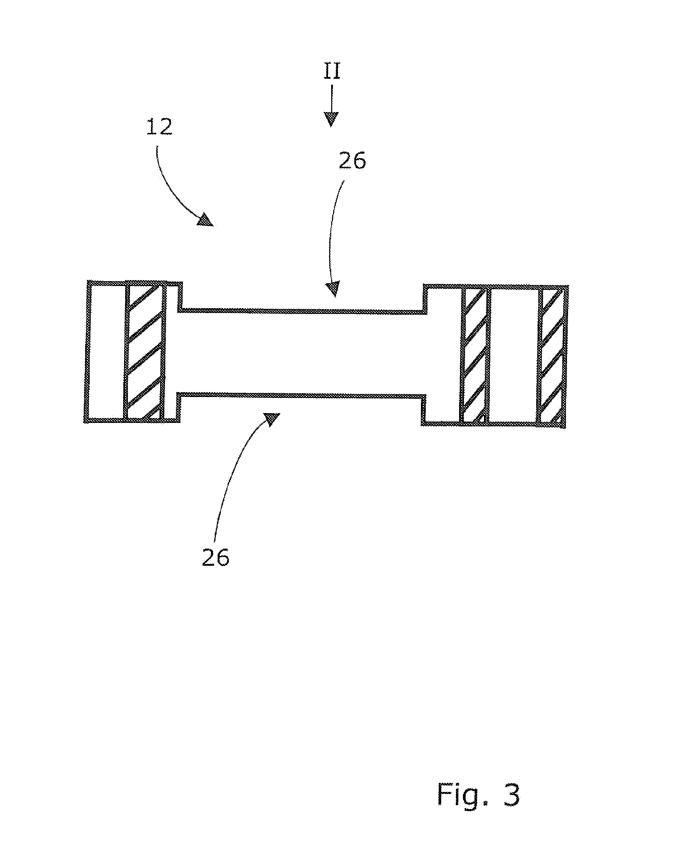

In figure 3, the stator ring 12 is shown as a cross-section of the stator ring 12 of fig. 2 along line III - III with a height profile of the stator ring 12. The stator ring 12 is provided with the two radial openings 26 realized as two recess-like openings at both axial sides of the stator ring 12.

The variable-displacement lubricant pump 10 for an internal combustion engine pumps the lubricant in a first step into the inlet prechamber 20. The lubricant flows during the rotation of the rotor ring 14 through the axial inlet opening 22 and the two radial inlet openings 26 into the pump chamber sections 19 at the initial circumferential end of the axial inlet opening 22. The simple and effective feature of the recess-like openings in the stator ring 12 avoids or reduces the cavitation in this initial phase, reduces a bad filling and increases the degree of efficiency of the variable-displacement lubricant pump 10.

## Claims

1. A variable-displacement lubricant pump (10) for providing pressurized lubricant for an internal combustion engine, with
a rotor ring (14) with radially slidable vanes (16), the slidable vanes (16) rotating in a shiftable stator ring (12) being arranged between two side walls (24), wherein the stator ring (12) envelopes a pump chamber (18), and
an inlet prechamber (20) which is separated by the stator ring (12) from the pump chamber (18) inside the stator ring (12), and
an axial inlet opening (22) in a side wall (24), the inlet opening (22) connecting the inlet prechamber (20) with the pump chamber (18),
**characterized by**
a radial inlet opening (26) in the stator ring (12).

2. A variable-displacement lubricant pump (10) of claim 1, wherein the radial inlet opening (26) in the stator ring (12) is a recess-like opening adjacent to the axial inlet opening (22).

3. A variable-displacement lubricant pump (10) of claim 1 or 2, wherein the radial inlet opening (26) has an axial recess depth of at least 1/8 of the axial height of the stator ring (12).

4. A variable-displacement lubricant pump (10) of one of the preceding claims, wherein the radial inlet opening (26) has a circumferential extend of at least 1/6 of the circumference of the stator ring (12).

5. A variable-displacement lubricant pump (10) of one of the preceding claims, wherein the radial inlet opening (26) is positioned at the initial circumferential end of the axial inlet opening (22).

6. A variable-displacement lubricant pump (10) of claim 2 - 5, wherein the stator ring (12) has two recess-like openings which are provided at both axial sides of the stator ring (12).
